# EUROPÄISCHE PATENTSCHRIFT

(11) **EP 0 785 609 B1**
(45) Veröffentlichungstag und Bekanntmachung des Hinweises auf die Patenterteilung: **10.04.2002**
(21) Anmeldenummer: 97100569.9
(22) Anmeldetag: 16.01.1997
(51) Int. Cl.: H02G 3/22, F16L 5/04

(54) **Hartabschottungssystem zur Kabel-oder Blindabschottung**
Rigid partitioning system for cable or wall partitioning
Système rigide formant cloison pour cloisonnage de câbles ou murs

(30) Priorität: 22.01.1996 AT 9596
(43) Veröffentlichungstag der Anmeldung: 23.07.1997
(73) Patentinhaber: Intumex Brandschutzprodukte AG, 4021 Linz (AT)
(72) Erfinder: Rauser, Vladimir, 252 07 Slapy nad Vltavou (CZ)
(74) Vertreter: Klostermann, Ingrid

(56) Entgegenhaltungen:
- DE-A- 2 726 241
- DE-A- 4 234 374
- DE-A- 4 325 967
- US-A- 4 419 535

## Beschreibung

Beim Bau von feuersicheren Räumen müssen bei den für Kabel, Rohre, Lüftungsschächte bzw. -öffnungen nötigen Mauerdurchbrüchen Brandschutzmaßnahmen getroffen werden, um ein Ausbreiten von Feuer zu verhindern. Eine bisher bekannte mögliche Brandschutzmaßnahme ist zum Beispiel das Verschließen von Mauerdurchbrüchen für Kabeldurchführungen durch Zumauem bzw. Verschließen mittels Brandschutzkitten, Brandschutzmörteln, Silikonschäumen oder intumeszierenden Massen, gegebenenfalls in Verbindung mit Mineralvollplatten.
Der Nachteil dieser Brandschutzmaßnahmen ist jedoch, daß sie zum Teil keine ausreichende Brandwiderstandsklasse erreichen, da zum Beispiel Öffnungen, die im Brandfall durch das Schmelzen von Kabeln entstehen, etwa bei alleiniger Verwendung von Brandschutzmörteln nicht vollständig verschlossen werden, oder daß sie meist aufwendig angepaßt werden müssen. Ein weiterer Nachteil insbesondere von bisher bekannten Brandschutzmaßnahmen auf Gipsbasis, ist deren beschränkte Einsatzmöglichkeit bei Gipskartonwänden, da diese beim Einbau von vor Ort herzustellenden Gipsmörteln durch das dazu notwendige Wasser durchtränkt werden, was wiederum zu statischen Problemen führen kann.

Aus DE 43 25 967 sind Brandschutzziegel bekannt, die mit einem Dämmschichtbildner beschichtet sind. Als Brandschutzziegel kommen dabei Mauerziegel, beispielsweise aus Ton, Blähton, Beton, Leichtbeton oder Stein, in Frage.

Aufgabe der vorliegenden Erfindung war es demnach, eine Möglichkeit zu finden, Brandschutzmaßnahmen zur Kabel- oder Blindabschottung so zu gestalten, daß sie ohne großen Aufwand für Einbau bzw. Anpassung eingebaut werden können, wobei gleichzeitig eine Brandwiderstandsdauer von mindestens 90 Minuten gemäß CSN 730851 gewährleistet wird.

Unerwarteterweise konnte diese Aufgabe durch ein Abschottungssystem gelöst werden, das aus speziellen Brandschutzziegeln gegebenenfalls in Kombination mit einem intumeszierenden Material besteht.

Gegenstand der vorliegenden Erfindung ist daher ein Hartabschottungssystem zur Kabel- oder Blindabschottung aus Brandschutzziegeln, das dadurch gekennzeichnet ist, daß es aus
a) Brandschutzziegeln auf Mörtelbasis, gegebenenfalls in Kombination
b) mit intumeszierendem Material und/oder
c) Mineralwolle
wobei das System gegebenenfalls mit einem Verputz versehen ist.

Komponente a) des erfindungsgemäßen Abschottungssystem besteht aus Brandschutzziegeln auf Mörtelbasis.

Geeignete Materialien zur Herstellung der Ziegel sind dabei alle Mörtelarten mit hohem Isolationswert bzw. niedriger Wärmedurchgangszahl. Mörtel ist dabei die Bezeichnung für einen künstlichen Stein, der aus einem Gemisch von einem oder mehreren anorganischen Bindemitteln, Zuschlägen bis 4 mm Korngröße, Wasser und gegebenenfalls Mörtelzuschlägen wie etwa Vermiculit oder Perlit durch Erhärten des Bindemittelleims entsteht. Nach der Art des Bindemittels bzw. des Zuschlages unterscheidet man dabei u. a. Gipsmörtel, Kalkgipsmötel, Zementmörtel, Vermiculitmörtel, u.s.w. Bevorzugt sind Mörtel auf Basis von Gips und Vermiculit, Perlit. Besonders bevorzugt werden Mörtel auf Gipsbasis verwendet.

Die Form, Größe und somit Anzahl der verwendeten Ziegel kann je nach Größe der brandsicher auszurüstenden Öffnung variieren.
So kann beispielsweise bei Blindabschottungen die zu verschließende Öffnung mit nur einem der Größe der Öffnung entsprechenden Ziegel verschlossen werden, es können aber auch mehrere kleinere Ziegel eingebaut werden.
Bei Kabelabschottungen kann im Prinzip wie bei Blindabschottungen verfahren werden, es ist hier jedoch beim Einbau der Ziegel genügend Platz für die Kabelbündel bzw. Kabeltrassen auszusparen.
Die Form der Ziegel entspricht bevorzugt einem Quader oder rechteckigem Pyramidenstumpf, besonders bevorzugt einem rechteckigen Pyramidenstumpf.
Bevorzugt sind Ziegel mit einer Grundfläche von 50 bis 500 mm Länge und 20 bis 150 mm Breite und einer Höhe von 20 bis 100 mm. Die Deckfläche des quaderförmigen Ziegels entspricht dabei der oben definierten Grundfläche, bei pyramidenstumpfförmigen Ziegeln ist die Deckfläche kleiner als die Grundfläche. Bevorzugt sind daher pyramidenstumpfförmige Ziegel mit einer Deckfläche von 30 bis 300 mm Länge und 20 bis 150 mm Breite. Die Breite der Deckfläche kann dabei der Breite der Grundfläche entsprechen, sodaß die Form der Ziegel der Form eines Goldbarrens entspricht.
Die Form und Größe der Ziegel muß jedoch, den jeweiligen Gegebenheiten angepaßt werden und kann somit falls erwünscht, die oben definierten Größen überbzw. unterschreiten.
Die Herstellung der Gipsziegel erfolgt zur Gipsverarbeitung auf übliche Weise, beispielsweise durch Vermischen mit einer Armierung, Zuschlägen wie Verflüssiger, Farbe u.s.w. und mit Wasser in Form gießen und trocknen lassen.
Der Einbau der Ziegeln in die brandsicher auszustattende Öffnung erfolgt auf übliche Weise mittels Mörteln bzw. Putzen, die eine ausreichende Haftung zum Ziegel gewährleisten. Es können dabei beispielsweise Putze bzw. Mörtel wie Gipsputze, Kalk- und Kalkzementputze, u.s.w. verwendet werden.
Bevorzugt werden Brandschutzmörtel wie etwa Vermiculitmörtel verwendet.

Die Brandschutzziegeln a) werden bevorzugt in Kombination mit einer intumeszierenden Masse als Komponente eingebaut. Als intumeszierende Masse b) eignen sich dabei alle im Brandfall aufschäumenden Massen, die in Form von Laminaten, Kitten, Dispersionen, Lösungen oder Pasten erhältlich sind. Beispiele dafür sind Brandschutzmassen auf Basis von Blähgraphit oder von Alkalisilikaten, Massen auf Basis flammfest eingestellter, mit stickstoffhaltigen oder phosphorhaltigen Blähmittel modifizierter Polyvinylacetatdispersionen, auf Basis mittels Latexdispersionen modifizierter, wäßriger Alkalisilikate oder auf Basis flammfest modifizierter, stickstoffoder phosphorhaltige Blähmittel enthaltende Polyurethane.
Die Brandschutzmassen können auch Bindemittel wie z. B. Polyvinylacetat, Polyvinylacrylat, Polyvinylchlorid-Mischpolymerisate oder Polychloroprene und Kohlenstoff- bzw. Krustenbildner wie z. B. Zucker, Melasse, Polyimide, Polyacrylnitril, Phenolharze, Melaminharze oder Phosphonate enthalten. Derartige intumeszierende Brandschutzmassen sind beispielsweise in EP-B-0 153 564 beschrieben. Sie sind auch kommerziell erhältlich, beispielsweise unter dem Markennamen Intumex^{R} bei Chemie Linz.

Bei Verwendung des erfindungsgemäßen Abschottungssystemes zur Kabelabschottung wird die Komponente b) bevorzugt so eingebaut, daß die Kabeln bzw. Kabelbündel mit Komponente b) abgedeckt werden. Weiters ist es möglich, daß die Komponente b) gleichzeitig als Bewegungsfuge dient. In diesem Fall wird die Brandschutzmasse zwischen Wand und Brandschutzziegel a) eingebaut. Dies kann beispielsweise in Form von Streifen, gerollten Systemen, Brandschutzpolstem, Brandschutzsilikon, Brandschutzfugenmassen u.s.w. erfolgen.
Die Anordnung der Komponenten a) und b) sowie die Art der Komponente b) muß jedoch wiederum den jeweiligen Gegebenheiten angepaßt werden.
Weiters kann das erfindungsgemäße Abschottungssystem noch mit Mineralwolle als Komponente c) unterstützt werden.
Der Einbau eines Mineralwollstreifens und/oder einer Brandschutzmasse b) in die Fuge zwischen Wand und Brandschutzziegel stabilisiert das Abschottungssystem gegen Erschütterungen bzw. Vibrationen.
Die Maßnahmen b) und c) können dabei jede für sich allein genommen aber auch in Kombination, beispielsweise seitliche Anbringung von Mineralwolle und ober- bzw. unterhalb der Ziegeln Anbringung von Brandschutzsilikon gegebenenfalls in Kombination mit einer Abdeckung der Kabeltasse mittels Komponente b), angewandt werden.

Das erfindungsgemäße Abschottungssystem kann je nach den Anforderungen an das System mit einem Verputz versehen werden.
Zur Erhöhung der Festigkeit und der Wasserbeständigkeit des Systems, sowie aus optischen Gründen wird das System bevorzugt verputzt. Als Verputz eignen sich beispielsweise alle üblichen Putzmörtel basierend auf Gips, Kalk, Zement, wie etwa Mörtelgipse, Fertigputzgipse, Maschinenputzgipse, Haftputzgipse u.s.w..
Bevorzugt werden dabei Brandschutzmörtel wie etwa Vermiculitmörtel verwendet.

Das erfindungsgemäße Abschottungssystem eignet sich zur Kabel- und Blindabschottung im Wand- und Deckenbereich. Bevorzugt wird das System im Wandbereich eingesetzt. Durch die Kombinationsmöglichkeiten der Komponenten a) bis c) gegebenenfalls mit einem Verputz kann das System den jeweiligen Anforderungen optimal und auf einfache Weise angepaßt und eine Brandwiderstandsdauern von mindestens 90 Minuten erzielt werden.

### Herstellung der Gipsziegel

Zur Herstellung von 100 Stück Ziegeln mit einem Grundriß von 80 mm Breite, 160 mm Länge, einer Höhe von 40 mm und einer Deckfläche von 80 mm Breite und 130 mm Länge wurden 45 kg Gips (G2-B-II, CSN 722303, Fa. Gipstrend) mit 1 kg Perlit (Experlit EP 150, Fa. Kerko Kosice) vermischt. Weiters wird eine Mischung aus 60 Liter Wasser mit 1,9 kg roter Volltonfarbe (Fa. Richard Sommer GmbH) und 0,45 kg LiquimentN (Fa. Chemie Linz) hergestellt.
Anschließend wurde die Gipsmischung in die Wassermischung eingebracht, ca 2 Minuten stehen gelassen und zu einer homogenen Mischung verrührt.
Diese Masse wurde sodann in entsprechende Formen gegossen und trocknen gelassen.

### Beispiel 1

Es wurde ein Brandtest bei einem System bestehend aus Kabeltrasse, Gipsziegeln hergestellt nach obigem Beispiel, die mittels Perlfix (Mörtel auf Basis von Perlit) eingemauert wurden, sowie Intumex F das als Komponente b) diente, durchgeführt.
Der Aufbau, sowie die Meßpunkte sind aus Figur 1 ersichtlich.

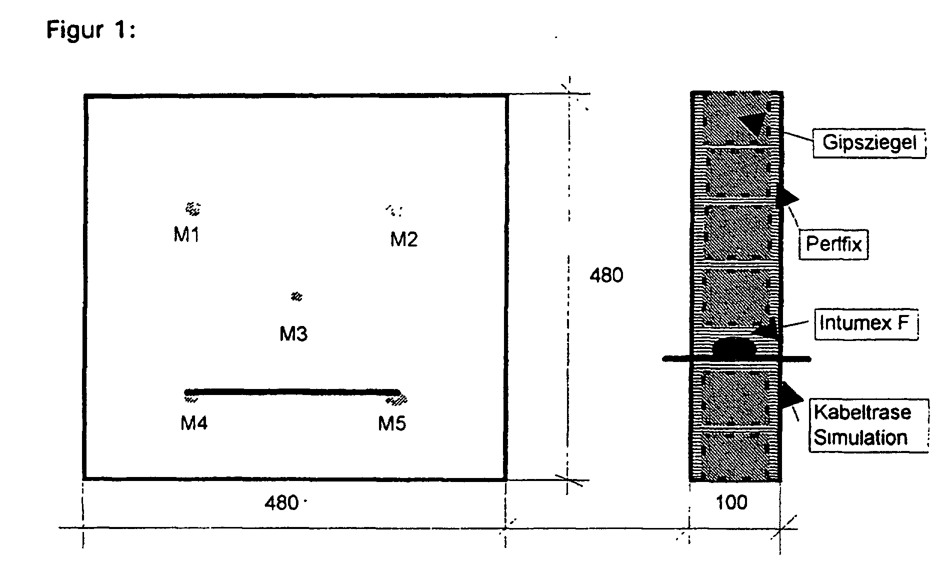

Zur Montage des Hartabschottungssystems wurde eine Hilfskonstruktion aus Stahlblech mit U-Profil 100 x 50 x 0,6 mm als Blechrahmung verwendet. Zur Kabeltrassensimulation wurde ein Stahlblech mit den Abmessungen 250 mm Breite x 120 mm Länge x 2,5 mm Dicke verwendet.
Intumex F wurde dabei mittig auf die Trasse aufgebracht und hatte die Maße 20 x 20 x 250 mm (ca. 100 cm³) (Brandtest analog CSN 730851)
Die Brandtemperatur entsprach der ISO-Kurve. Die Temperaturen an den Meßpunkten wurde in 10 Minuten Abständen gemessen und sind aus Tabelle 1 ersichtlich.
Das Resultat des Vesuches war, daß das Hartabschottungssystem bei 100 mm Dicke eine Feuerwiderstandsdauer von mindestens 120 Minuten erzielte. Auch die Stabilität des Systems war nach 130 Minuten unverändert.

**Tabelle 1**

| **Zeit** | **M1** | **M2** | **M3** | **M4** | **M5** |
|---|---|---|---|---|---|
| **0** | 20 | 20 | 20 | 20 | 20 |
| **10** | 20 | 20 | 20 | 28 | 31 |
| **20** | 17 | 18 | 19 | 31 | 35 |
| **30** | 19 | 21 | 21 | 42 | 40 |
| **40** | 25 | 29 | 26 | 50 | 47 |
| **50** | 27 | 30 | 28 | 74 | 62 |
| **60** | 32 | 35 | 35 | 75 | 60 |
| **70** | 37 | 38 | 39 | 89 | 67 |
| **80** | 36 | 38 | 39 | 95 | 78 |
| **90** | 39 | 42 | 45 | 116 | 107 |
| **100** | 43 | 42 | 46 | 132 | 107 |
| **110** | 44 | 45 | 46 | 155 | 117 |
| **120** | 44 | 46 | 47 | 158 | 119 |
| **130** | 46 | 47 | 51 | 159 | 120 |

### Beispiel 2:

Analog Beispiel 1 wurde ein Hartabschottungssystem, bestehend aus Intumex F zur Abdeckung der simulierten Kabeltrasse und Gipsziegeln hergestellt nach obigen Herstellungsbeispiel, die mittels Intumex V eingemauert wurden, einem Brandtest unterzogen. (Brandtest analog CSN 730851)
Der Versuchsaufbau ist aus Figur 2 ersichtlich. Die gemessenen Temperaturen aus Tabelle 2. Die Feuerwiderstandsdauer betrug minimal 100 Minuten.

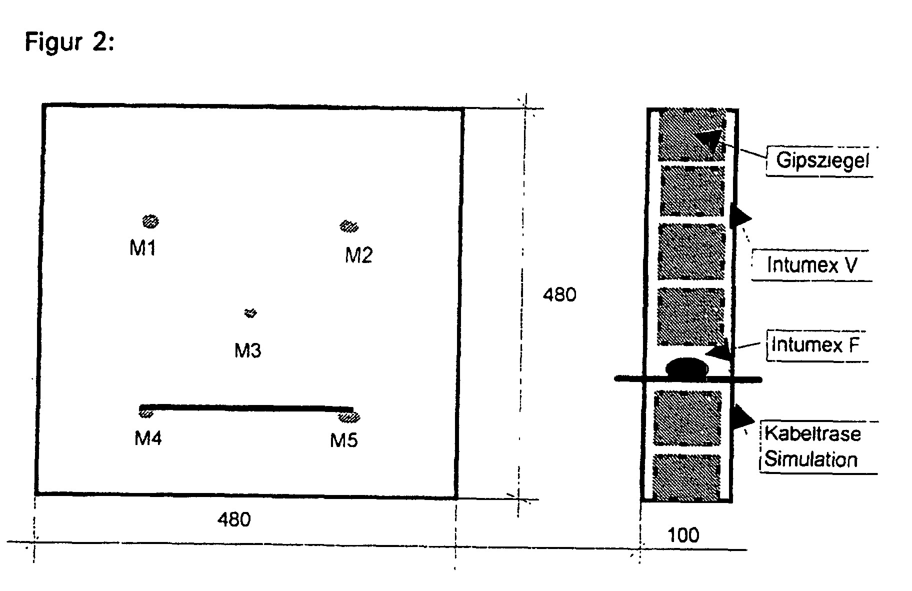

**Tabelle 2**

| **Zeit** | **M1** | **M2** | **M3** | **M4** | **M5** |
|---|---|---|---|---|---|
| **0** | 20 | 20 | 20 | 20 | 20 |
| **10** | 21 | 21 | 21 | 42 | 45 |
| **20** | 39 | 36 | 27 | 59 | 55 |
| **30** | 52 | 49 | 43 | 77 | 68 |
| **40** | 55 | 55 | 51 | 96 | 89 |
| **50** | 56 | 56 | 55 | 122 | 112 |
| **60** | 58 | 57 | 56 | 144 | 126 |
| **70** | 61 | 58 | 59 | 149 | 143 |
| **80** | 63 | 61 | 60 | 164 | 156 |
| **90** | 63 | 62 | 61 | 178 | 184 |
| **100** | 63 | 63 | 61 | 184 | 185 |

## Patentansprüche

1. Hartabschottungssystem zur Kabel- oder Blindabschottung aus Brandschutzziegeln, **dadurch gekennzeichnet, daß** es aus
a) Brandschutzziegeln auf Mörtelbasis gegebenenfalls in Kombination mit
b) intumeszierendem Material und/oder
c) Mineralwolle
besteht, wobei das System gegebenenfalls mit einem Verputz versehen ist.

2. Hartabschottungssystem nach Anspruch 1, **dadurch gekennzeichnet, daß** es aus
a) Brandschutzziegeln auf Mörtelbasis in Kombination mit
b) intumeszierendem Material besteht.

3. Hartabschottungssystem nach Anspruch 1, **dadurch gekennzeichnet, daß** es aus
a) Brandschutzziegeln auf Mörtelbasis in Kombination mit
b) intumeszierendem Material besteht und
c) Mineralwolle
besteht.

4. Hartabschottungssystem nach Anspruch 1, **dadurch gekennzeichnet, daß** es aus
a) Brandschutzziegeln auf Mörtelbasis in Kombination mit
b) intumeszierendem Material und
c) Mineralwolle
besteht und das Sytem mit einem Verputz versehen ist.

5. Hartabschottungssystem nach Anspruch 1, **dadurch gekennzeichnet, daß** Brandschutzziegeln aus Mörtel auf Gipsbasis verwendet werden.

6. Hartabschottungssystem nach Anspruch 1, **dadurch gekennzeichnet, daß** als Verputz Putzmörtel auf Basis von Gips, Kalk oder Zement verwendet wird.

7. Hartabschottungssystem nach Anspruch 1, **dadurch gekennzeichnet, daß** als Verputz Vermiculitmörtel verwendet wird.

## Claims

1. Hard passage-sealing system, made from fire-protection bricks, for the sealing of cable passages or blind passages, **characterized in that** it is composed of
a) mortar-based fire-protection bricks, where appropriate in combination with
b) intumescent material and/or
c) mineral wool,
the system having been provided with a render, where appropriate.

2. Hard passage-sealing system according to Claim 1, **characterized in that** it is composed of
a) mortar-based fire-protection bricks in combination with
b) intumescent material.

3. Hard passage-sealing system according to Claim 1, **characterized in that** it is composed of
a) mortar-based fire-protection bricks in combination with
b) intumescent material and
c) mineral wool.

4. Hard passage-sealing system according to Claim 1, **characterized in that** it is composed of
a) mortar-based fire-protection bricks in combination with
b) intumescent material and
c) mineral wool,
and the system has been provided with a render.

5. Hard passage-sealing system according to Claim 1, **characterized in that** use is made of fire-protection bricks made from mortar based on gypsum.

6. Hard passage-sealing system according to Claim 1, **characterized in that** the render used comprises plastering mixes based on gypsum, lime or cement.

7. Hard-passage-sealing system according to Claim 1, **characterized in that** the render used is vermiculite mortar.

## Revendications

1. Système de cloisonnement rigide pour le cloisonnement de câbles ou pour le cloisonnement aveugle constitué par des briques réfractaires, **caractérisé en ce qu'**il est constitué par:
a) des briques réfractaires à base de mortier, éventuellement en combinaison avec
b) un matériau intumescent et/ou
c) de la laine minérale
le système étant éventuellement pourvu d'un crépis.

2. Système de cloisonnement rigide selon la revendication 1, **caractérisé en ce qu'**il est constitué par
a) des briques réfractaires à base de mortier en combinaison avec
b) un matériau intumescent.

3. Système de cloisonnement rigide selon la revendication 1, **caractérisé en ce qu'**il est constitué par
a) des briques réfractaires à base de mortier en combinaison avec
b) un matériau intumescent, et
c) de la laine minérale.

4. Système de cloisonnement rigide selon la revendication 1, **caractérisé en ce qu'**il est constitué par
a) des briques réfractaires à base de mortier en combinaison avec
b) un matériau intumescent, et
c) de la laine minérale.
et le système est pourvu d'un crépis.

5. Système de cloisonnement rigide selon la revendication, **caractérisé en ce qu'**on utilise des briques réfractaires formées d'un mortier à base de plâtre.

6. Système de cloisonnement rigide selon la revendication 1, **caractérisé en ce qu'**on utilise comme crépis, un mortier à crépir à base de plâtre, de chaux ou de ciment.

7. Système de cloisonnement rigide selon la revendication 1, **caractérisé en ce qu'**on utilise, comme crépis, du mortier à base de vermiculite.
